Europäisches Patentamt

(19) European Patent Office

Office européen des brevets

(11) Publication number: **0 202 944**
A2

(12) # EUROPEAN PATENT APPLICATION

(21) Application number: **86303908.7**

(22) Date of filing: **22.05.86**

(51) Int. Cl.⁴: **E 04 C 2/26**
**E 04 B 1/60**

(30) Priority: **22.05.85 GB 8512992**

(43) Date of publication of application:
**26.11.86 Bulletin 86/48**

(84) Designated Contracting States:
**AT BE CH DE FR GB IT LI LU NL SE**

(71) Applicant: **Derrygate Limited**
**Unit 3 Chancel Place Ham Lane**
**Kingswinford West Midlands DY6 7JR(GB)**

(72) Inventor: **Guy-Williams, Terrence James**
**Van Dykes, Sytch Lane**
**Wombourne, West Midlands(GB)**

(74) Representative: **Russell, Paul Sidney et al,**
**Barker, Brettell & Duncan 138 Hagley Road Edgbaston**
**Birmingham B16 9PW(GB)**

(54) Foam-filled thermal insulation panel.

㊗ A foam-filled thermal insulation panel comprises metal side sheets (14,16) and an extruded plastics edging strip (20;22) which together enclose a cavity filled with foam (18). The edging strip comprises slotted edge portions which receive inturned edge flanges (24,26) of the side sheets, so relatively locating the components and eliminating the usual need for jigging during in-filling with the foam. The edging strips of adjacent panel edges to be connected have complementary male (28) and female (38) forms to enable the panels to be snap-fitted together, the strips so serving both to connect the panels and provide a seal between them.

1

## FOAM-FILLED THERMAL INSULATION PANEL

This invention is concerned with improvements in or relating to interconnectable foam-filled thermal insulation panels, such as may be used to construct storage compartments to be refrigerated.

A well known form of insulation panel, much used in the refrigeration industry, is a rectangular foam-filled panel which is provided along one of its two opposite side edges with a plurality of built-in key-operable latch mechanisms and along the other of its side edges with a plurality of correspondingly located built-in keeps. When two such panels have been brought together edge-to-edge for interconnection, the latches of one panel so being positioned opposite the keeps of the other panel, the latches can be manually operated one by one to engage the keeps and secure the panels together.

In the manufacture of such known panels, jigs are employed to position the latches and keeps during in-filling of the panel with foam. The set foam subsequently serves to retain the latches and keeps in position. To achieve a seal between the adjacent panel edges, additional sealing strips are provided along the side edges to abut one another between the panels.

There is proposed in U.K. patent specification No. 1 191 656 a construction of insulation panel in which a plastics edging strip is used to close the side edge of a panel, between metal side sheets, the strip being so formed as to interlock with a similar strip on an adjacent panel edge when connecting two panels edge-to-edge. In that proposed arrangement, inturned edge flanges of the side sheets simply overlap outer surfaces of edge portions of the strip and in constructing the panel it must be necessary (though this aspect is not described) to provide a jig or some other means of retention to maintain the strip in position, against the flanges, during in-filling of the panel with foam.

It is an object of the present invention to provide an improved construction of foam-filled thermal insulation panel which enables manufacture to be simplified and a generally improved panel to be provided.

In one of its aspects the invention provides a foam-filled thermal insulation panel comprising an edging strip which is formed to enable the panel to be secured to a second panel comprising a complementary edging strip in a snap-fitting interengagement between the edging strips, the edging strip comprising slotted edge portions in which inturned edge flanges of opposed side sheets of the panel are received.

The invention can enable simpler and cheaper manufacture of panels substantially without the need for locating jigs during in-filling. By utilising, for example, moulded (e.g. extruded) plastics strips, suitable lengths of strip being secured at the panel edges, interconnecting and sealing means can be provided in a cheap and simple manner which reduces component costs and eases panel manufacture. In installation, panels can be snap-fitted together in a single operation, eliminating the need for each of a plurality of key-operated latches to be attended to individually.

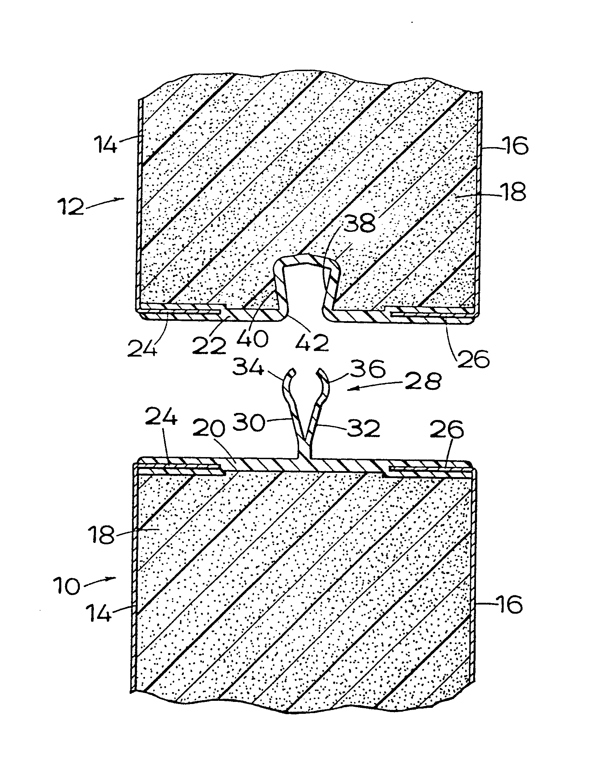

There now follows a description, to be read with reference to the accompanying drawing, of a foam-filled thermal insulation panel which illustrates the invention by way of example.

The accompanying drawing shows a plan view in cross-section of opposed side edge portions of two panels which are in position to be moved together for interconnection.

Two flat panels 10 and 12, of which edge portions are shown in the drawing, are interconnectable insulating panels such as may be joined together edge-to-edge to form the walls etc. of a refrigerated storage compartment. Each panel is of a rigid, self-supporting, construction.

Each panel comprises two metal side sheets 14 and 16 between which is a filling 18 of a thermally insulating plastics foam material (e.g. a polyurethane foam). Each panel is rectangular, and there are provided along the two opposite side edges of each panel (one such side edge of each panel being illustrated in section by the drawing) male and female extruded plastics connecting strips 20 and 22 respectively.

Each of the connecting strips is of a width similar to the thickness of its panel and extends along substantially the whole of the length of the panel side edge. The opposite edge portions of each strip are secured to side edge portions of the metal side sheets 14 and 16 which are inturned to form flanges 24 and 26. The edge portions of the strip are formed slotted to receive the flanges 24 and 26 in a sandwich construction as shown in the drawing. In construction of the panel the flanges of the two side sheets 14 and 16 are slotted into the two connecting strips to form a hollow (generally tubular) panel sub-assembly which (with the ends of the sub-assembly temporarily closed off suitably) can then be filled with foam. The set foam serves to bond the panel together.

The two panels 10 and 12 can be secured together edge-to-edge by means of the connecting strips 20 and 22. The male connecting strip 20 comprises a headed connecting rib 28 which extends longitudinally and centrally of the strip and projects outwardly of the panel (generally in the plane of the panel) from the remainder of the strip. The rib runs for the whole of the length of the strip without interruption. The rib comprises two outwardly-extending divergent limbs 30 and 32 which are each shaped at outermost free end portions 34 and 36 to provide the rib with a laterally resiliently compressible head portion. The female connecting strip 22 is shaped to provide a connecting channel 38 which extends longitudinally and centrally of the strip to receive the head portion of the male strip 20 on the other panel. The channel runs for the whole length of the strip without interruption. A channel-providing portion 40 of the female strip is shaped to provide a channel with side walls which diverge from the channel opening 42, the width of the opening 42 being rather less than the width of the head portion of the rib 28 of the male strip in order that the rib can be snap-fitted into the complementary channel upon pushing the two panels together.

The "stud and socket" type of snap fastening so provided between the panels 10 and 12 by the strips 20 and 22 enables the panels to be interconnected simply. Furthermore, the interconnected strips themselves provide a continuous seal between the two panels all along their side edges, without further provision for sealing having to be made.

CLAIMS

1. A foam-filled thermal insulation panel comprising an edging strip (20;22) which is formed to enable the panel to be secured to a second panel comprising a complementary edging strip (22;20) in a snap-fitting interengagement between the edging strips, characterised in that the edging strip comprises slotted edge portions in which inturned edge flanges (24,26) of opposed side sheets (14,16) of the panel are received.

2. A panel according to claim 1 comprising two complementary edging strips (20;22) extending one along each of opposite edges of the panel and enabling the panel to be secured edge-to-edge at each of the opposite edges with an identical panel, each of the strips comprising slotted edge portions in which inturned edge flanges (24,26) of the side sheets (14,16) are received.

3. A panel according to claim 1 in which the edging strip (20;22) is a moulded plastics strip.

4. A panel according to claim 2 in which the edging strips (20;22) are moulded plastics strips.

0202944